# EUROPEAN PATENT APPLICATION

(11) **EP 2 343 610 A2**
(43) Date of publication of application: **13.07.2011**
(21) Application number: 10195580.5
(22) Date of filing: 17.12.2010
(51) Int. Cl.: G05B 15/02

(54) **Method and apparatus for monitoring and controlling a power system**

(30) Priority: 05.01.2010 US 652384
(71) Applicant: General Electric Company, Schenectady, NY 12345 (US)
(72) Inventor: Kumar, Vivek, 500081, Andhra Pradesh (IN); A, Hemanth Kumar, 500081, Andhra Pradesh (IN); Jose, Chery, 500081, Andhra Pradesh (IN); Parija, Sonali, 500081, Andhra Pradesh (IN); Badugu, Srikanth, 500081, Andhra Pradesh (IN)
(74) Representative: Bedford, Grant Richard

(57) **Abstract**

A power system (100) includes a plurality of power generation units configured to generate power from a renewable energy source, at least one controller (110) configured to be coupled to at least one power generation unit of said plurality of power generation units, and a server (124) configured to be communicatively coupled to said at least one controller. The server is configured to receive operational data from said at least one controller, transmit the operational data to a user (330,332), and control an operation of said plurality of power generation units.

## Description

The present application relates generally to solar power systems and, more particularly, to a method and apparatus for monitoring and controlling a power system.

Some known power systems convert solar energy into electrical energy. In some known solar power systems, a plurality of photovoltaic panels (also known as solar panels) are logically or physically grouped together to form an array of solar panels. The solar panel array generates electricity and transmits the energy to an electrical grid or other destination.

Some known solar panel arrays include a large number of solar panels and may occupy a large surface area. For example, a solar panel array capable of producing 80 megawatts (MW) of electricity may occupy more than 600 acres of land. The solar panels in a solar panel array may be coupled to a plurality of controllers that monitor and/or control the solar panels. However, each controller may be operated independently of each other controller. As such, a solar power system operator may be required to communicate with each controller individually to control and/or monitor an operation of the solar power system. Such solar power systems may be inefficient and/or time-consuming to operate.

In one embodiment, a power system is provided. The power system includes a plurality of power generation units configured to generate power from a renewable energy source and at least one controller configured to be coupled to at least one power generation unit of the plurality of power generation units. The power system also includes a server configured to be communicatively coupled to the at least one controller. The server is configured to receive operational data from the at least one controller, transmit the operational data to a user, and control an operation of the power generation units.

In another embodiment, a method of assembling a power system is provided. The method includes providing a plurality of solar panels and at least one inverter, coupling at least one controller to at least one solar panel of the plurality of solar panels and to at least one inverter, and communicatively coupling a server to the at least one controller. The server is configured to receive solar panel data from the at least one controller, transmit the solar panel data to a user, and control an operation of the solar panels.

In another embodiment, a server for use in a power system having a plurality of solar panels and at least one controller is provided. The server includes a communication module configured to be communicatively coupled to the at least one controller and an interface module configured to provide data communication between the server and a user. The server is configured to receive solar panel data from the at least one controller, provide the solar panel data to the user, and control an operation of the solar panels.

Various aspects and embodiments of the present invention will now be described in connection with the accompanying drawings, in which:
Figure 1 is a block diagram of an exemplary solar power system.
Figure 2 is a block diagram of an alternative solar power system.
Figure 3 is a block diagram of an exemplary server that may be used with the solar power systems shown in Figures 1 and 2.
Figure 4 is a block diagram of an alternative server that may be used with the solar power systems shown in Figures 1 and 2.
Figure 5 is a block diagram of an exemplary control interface that may be used with the servers shown in Figures 3 and 4.

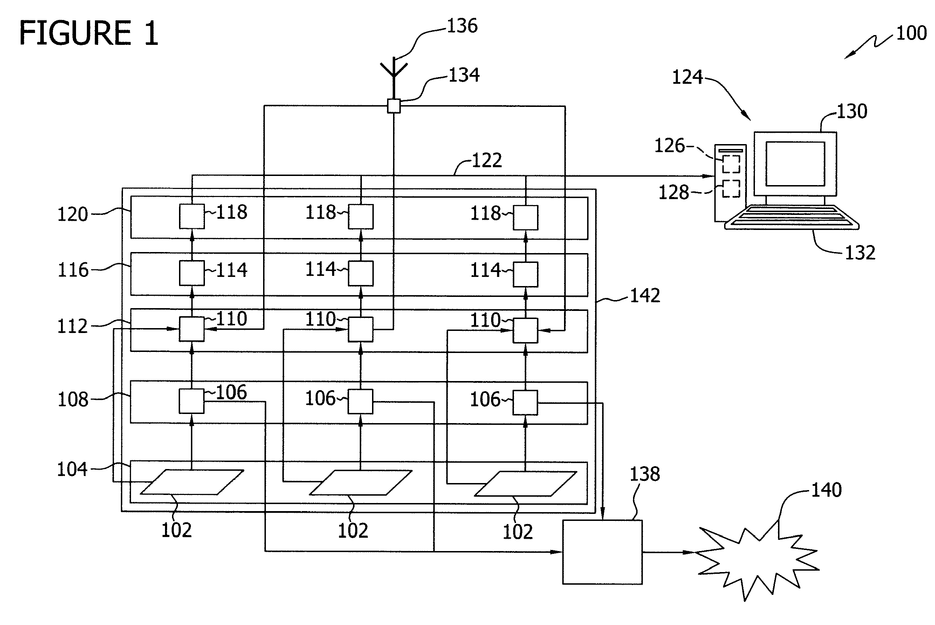

Figure 1 illustrates an exemplary power system 100 that includes at least one power generation unit, such as a solar panel 102. In the exemplary embodiment, power system 100 includes a plurality of solar panels 102 that form at least one solar panel array 104. Alternatively, power system 100 includes any suitable power generation units, such as a plurality of wind turbines, fuel cells, geothermal generators, hydropower generators, and/or other devices that generate power from renewable and/or alternative energy sources. As used herein, the term "renewable energy source" refers to an energy source that is naturally replenished. As used herein, the term "alternative energy source" refers to any energy source that is not derived from fossil fuels or nuclear fission or fusion. In the exemplary embodiment, power system 100 and/or solar panel array 104 includes any number of solar panels 102 to facilitate operating power system 100 at a desired power output. In one embodiment, power system 100 includes a plurality of solar panel arrays 104 coupled together in a series-parallel configuration to facilitate generating a desired current and/or voltage output from power system 100.

Solar panel 102 includes, in one embodiment, a photovoltaic panel, a solar thermal collector, or any other device that converts solar energy to electrical energy. In the exemplary embodiment, solar panel 102 includes a photovoltaic panel and solar panels 102 generate a substantially direct current (DC) power as a result of solar energy striking solar panels 102. In the exemplary embodiment, each solar panel 102 includes a unique identification number, such as, without limitation, a unique serial number. As used herein, a "unique" number refers to a number that is not duplicated by any other component within power system 100. In an alternative embodiment, each solar panel 102 includes an identification number that is not unique, such as, without limitation, a model number, a manufacturer number, and/or a number that indicates a component classification type.

Power system 100 includes at least one inverter 106. In the exemplary embodiment, power system 100 includes a plurality of inverters 106 that form at least one inverter array 108. Power system 100 and/or inverter array 108 includes any number of inverters 106 to facilitate operating power system 100 at a desired power output. In the exemplary embodiment, inverter array 108 is coupled to solar panel array 104, and, more specifically, at least one inverter 106 is coupled to at least one solar panel 102. In the exemplary embodiment, inverter 106 is coupled to a respective solar panel 102. Alternatively, a single inverter 106 is coupled to two or more solar panels 102. In the exemplary embodiment, inverters 106 facilitate converting a substantially DC power from solar panels 102 to a substantially alternating current (AC) power. In the exemplary embodiment, each inverter 106 includes a unique identification number, such as, without limitation, a unique serial number. In an alternative embodiment, each inverter 106 includes an identification number that is not unique, such as, without limitation, a model number, a manufacturer number, and/or a number that indicates a component classification type.

Power system 100 includes at least one controller 110. In the exemplary embodiment, power system 100 includes a plurality of controllers 110 that form at least one controller array 112. Power system 100 and/or controller array 112 includes any number of controllers 110 to facilitate operating power system 100 as described herein. In the exemplary embodiment, controller array 112 is coupled to inverter array 108 and solar panel array 104, and, more specifically, at least one controller 110 is coupled to at least one inverter 106 and to at least one solar panel 102. In the exemplary embodiment, each controller 110 is coupled to a respective inverter 106 and to a respective solar panel 102. Alternatively, a single controller 110 is coupled to two or more inverters 106 and/or two or more solar panels 102.

In one embodiment, controller 110 includes, without limitation, a processor, microprocessor, microcontroller, programmable logic controller (PLC), reduced instruction set computer (RISC), a programmable gate array (PGA), application specific integrated circuit (ASIC), and/or any other programmable circuit that enables power system 100 to operate as described herein. In the exemplary embodiment, controller 110 includes a PLC. Controller 110 facilitates gathering information from and/or controlling an operation of one or more components of power system 100. In the exemplary embodiment, each controller 110 includes a unique identification number, such as, without limitation, a unique serial number. In an alternative embodiment, each controller 110 includes an identification number that is not unique, such as, without limitation, a model number, a manufacturer number, and/or a number that indicates a component classification type.

Power system 100 includes at least one communication device 114. In the exemplary embodiment, power system 100 includes a plurality of communication devices 114 that form at least one communication device array 116. Power system 100 and/or communication device array 116 include any number of communication devices 114 to facilitate operating power system 100 as described herein. In the exemplary embodiment, communication device array 116 is coupled to controller array 112, and, more specifically, at least one communication device 114 is coupled to at least one controller 110. In the exemplary embodiment, each communication device 114 is coupled to a respective controller 110. Alternatively, a single communication device 114 is coupled to two or more controllers 110. In the exemplary embodiment, communication devices 114 facilitate communicatively coupling one or more components of power system together via a network 122.

Communication device 114 may include, without limitation, a network interface controller (NIC), a network adapter, a transceiver, or any other communication device that enables power system 100 to operate as described herein. In one embodiment, communication device 114 is integrated within controller 110. In the exemplary embodiment, communication device 114 is a separate component from controller 110, and device 114 is communicatively coupled to controller 110 and network connector 118. Each communication device 114 includes a unique identification number, such as, without limitation, a unique media access control (MAC) address and/or a unique serial number. In an alternative embodiment, each communication device 114 includes an identification number that is not unique, such as, without limitation, a model number, a manufacturer number, and/or a number that indicates a component classification type.

Power system 100 includes at least one network connector 118. In the exemplary embodiment, power system 100 includes a plurality of network connectors 118 that form at least one network connector array 120. Power system 100 and/or network connector array 120 include any number of network connectors 118 to facilitate operating power system 100 as described herein. In the exemplary embodiment, network connector array 120 is coupled to communication device array 116, and, more specifically, at least one network connector 118 is coupled to at least one communication device 114. In the exemplary embodiment, each network connector 118 is coupled to a respective communication device 114. Alternatively, a single network connector 118 is coupled to two or more communication devices 114.

In one embodiment, network connector 118 includes, without limitation, a network bridge, switch, hub, repeater, router, or any other suitable device that facilitates communicatively coupling one or more components of power system 100 and/or segments of network 122 together. In the exemplary embodiment, network connector 118 includes a wired Ethernet switch. In an alternative embodiment, network connector 118 includes a wireless Ethernet switch. In the exemplary embodiment, each network connector 118 includes a unique identification number, such as, without limitation, a unique serial number and/or a unique MAC address. In an alternative embodiment, each network connector 118 includes an identification number that is not unique, such as, without limitation, a model number, a manufacturer number, and/or a number that indicates a component classification type.

Communication devices 114 are communicatively coupled to network 122 via network connectors 118. Communication device 114 may be configured to connect to network 122 using any suitable communication protocol. In the exemplary embodiment, network 122 and communication device 114 use the same communication protocol, such as an IEEE 802.3 wired Ethernet protocol or a wireless Ethernet protocol, such as, without limitation, an IEEE 802.11 protocol, an IEEE 802.15 protocol, and/or an IEEE 802.16 protocol. In an alternative embodiment, network 122 and communication device 114 use different protocols, and network connector 118 facilitates a bidirectional translation of the protocol used by communication device 114 and the protocol used by network 122.

In the exemplary embodiment, a server 124 is communicatively coupled to network 122. Server 124 includes at least one processor 126, at least one memory 128, at least one display 130, and at least one user interface 132. Server 124 facilitates monitoring and/or controlling one or more components of power system 100. In an alternative embodiment, a plurality of servers 124 is communicatively coupled to network 122. Processor 126 is coupled to memory 128, to display 130, and to user interface 132. In the exemplary embodiment, processor 126 includes a microprocessor. In an alternative embodiment, processor 126 includes a microcontroller, PLC, RISC, PGA, ASIC, and/or any other suitable programmable circuit that enables power system 100 to operate as described herein.

Memory 128 includes, without limitation, a computer readable medium, such as a hard disk drive, a solid state drive, a diskette, a flash drive, a compact disc, a digital video disc, and/or random access memory (RAM). Display 130 includes a liquid crystal display (LCD), a cathode ray tube (CRT), a plasma display, and/or any other suitable type of visual output device capable of displaying graphical data and text to a user. User interface 132 may include, without limitation, a keyboard, a keypad, a mouse, a pointing device, a touch sensitive screen, and/or an audio input device.

Power system 100 includes at least one meteorological tower 134 that includes at least one meteorological sensor 136. Meteorological sensor 136 is communicatively coupled to at least one controller 110. In an alternative embodiment, meteorological sensor 136 is communicatively coupled to server 124. Meteorological sensor 136 is configured to detect and/or monitor at least one meteorological condition at or proximate power system 100. For example, and without limitation, meteorological sensor 136 is configured to detect a temperature, wind speed, humidity, atmospheric pressure, and/or amount of sunlight at or proximate power system 100.

In the exemplary embodiment, power system 100 includes at least one substation 138 coupled to an electrical grid 140; inverters 106 transmit AC power to substation 138. Substation 138 conditions the AC power, such as by adjusting a voltage, a current, and/or a frequency of the AC power, and substation 138 transmits the AC power to electrical grid 140.

In one embodiment, one or more solar panels 102 and associated components, such as one or more inverters 106, controllers 110, communication devices 114, and/or network connectors 118 may be arranged in one or more solar panel groups 142. Each solar panel group 142 includes a plurality of solar panels 102, a plurality of inverters 106, a plurality of controllers 110, a plurality of communication devices 114, and a plurality of network connectors 118. Each solar panel group 142 may be controlled and/or monitored by server 124 and/or one or more intermediate servers (not shown in Figure 1).

During operation, solar energy is absorbed by solar panels 102 that convert the solar energy to DC electrical power and transmit the DC power to inverters 106. Inverters 106 convert the DC power to a substantially AC power, and transmit the AC power to substation 138. Substation 138 conditions the AC power to suit the characteristics of electrical grid 140, and transmits the AC power to grid 140. In the exemplary embodiment, controllers 110 control an operation of inverters 106 and/or solar panels 102, such as, without limitation, by adjusting one or more power output characteristics of inverters 106 and/or adjusting a positional angle of solar panels 102. Controllers 110 communicate with each other and/or with server 124 via communication devices 114 and/or network connectors 118.

In the exemplary embodiment, server 124 monitors and/or controls an operation of power system 100. More specifically, server 124 receives data from controllers 110, solar panels 102, and/or other components of power system 100. Server 124 stores the data in memory 128 and/or displays the data on display 130. Moreover, server 124 transmits one or more commands to controllers 110 and/or to other components of power system 100. Such commands may include, without limitation, commands to energize or de-energize one or more components, and/or commands to modify an operating condition of one or more components.

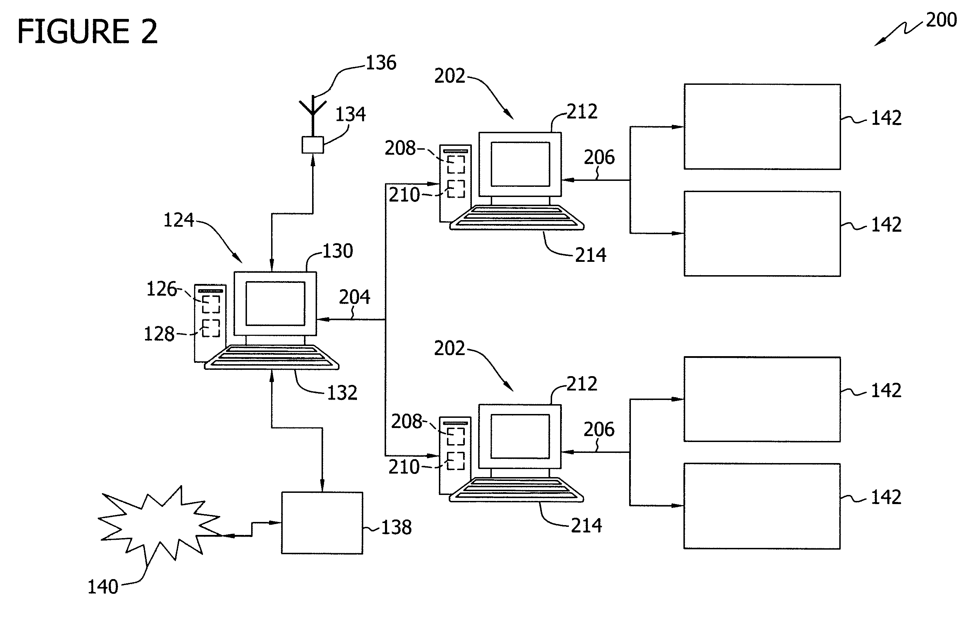

Figure 2 illustrates an alternative configuration of a power system 200. Power system 200 is similar to power system 100 (shown in Figure 1), and identical components are identified in Figure 2 using the same reference numbers used in Figure 1. In the alternative embodiment, power system 200 includes server 124, at least one meteorological tower 134 that includes at least one meteorological sensor 136, and at least one substation 138 coupled to electrical grid 140. Server 124 includes at least one processor 126, at least one memory 128, at least one display 130, and at least one user interface 132. Power system 200 also includes at least one solar panel group 142. In the alternative embodiment, power system 200 includes a plurality of solar panel groups 142.

In the alternative embodiment, power system 200 includes a plurality of intermediate servers 202. In another embodiment, power system 200 includes one intermediate server 202. Intermediate servers 202 are communicatively coupled to server 124 via at least one server data connection 204, and intermediate servers 202 are communicatively coupled to at least one solar panel group 142 via at least one panel data connection 206. More specifically, intermediate servers are communicatively coupled to at least one solar panel 102, inverter 106, controller 110, communication device 114, and/or network connector 118 (all shown in Figure 1) within solar panel group 142. In another embodiment, power system 200 does not include an intermediate server 202, and server 124 is communicatively coupled to at least one solar panel group 142 via server data connection 204, panel data connection 206, and/or network 122 (shown in Figure 1).

In the alternative embodiment, intermediate servers 202 each include at least one processor 208, at least one memory 210, at least one display 212, and at least one user interface 214. Processor 208 is communicatively coupled to memory 210, to display 212, and to user interface 214. In the alternative embodiment, processor 208 includes a microprocessor. In another embodiment, processor 208 includes a microcontroller, PLC, RISC, PGA, ASIC, and/or any suitable programmable circuit that enables power system 200 to operate as described herein.

In the alternative embodiment, memory 210 includes, without limitation, a computer readable medium, such as a hard disk drive, a solid state drive, a diskette, a flash drive, a compact disc, a digital video disc, and/or random access memory. Display 212 includes a liquid crystal display, a cathode ray tube, a plasma display, and/or any suitable type of visual output device capable of displaying graphical data and text to a user. User interface 214 may include, without limitation, a keyboard, a keypad, a mouse, a pointing device, a touch sensitive screen, and/or an audio input device.

In the alternative embodiment, server data connection 204 uses an IEEE 802.3 wired Ethernet protocol. In another embodiment, server data connection 204 uses a wireless Ethernet protocol, such as, without limitation, an IEEE 802.11 protocol, an IEEE 802.15 protocol, and/or an IEEE 802.16 protocol. In yet another embodiment, server data connection 204 uses a communication protocol such as universal serial bus (USB), IEEE 1394, small computer system interface (SCSI), fiber optics, or any suitable communication protocol that enables server 124 and/or intermediate servers 202 to operate as described herein. In one embodiment, server data connection 204 is communicatively coupled to network 122.

In the alternative embodiment, panel data connection 206 uses an IEEE 802.3 wired Ethernet protocol. In another embodiment, panel data connection 206 uses a wireless Ethernet protocol, such as, without limitation, an IEEE 802.11 protocol, an IEEE 802.15 protocol, and/or an IEEE 802.16 protocol. In yet another embodiment, panel data connection 206 uses a communication protocol such as universal serial bus (USB), IEEE 1394, small computer system interface (SCSI), fiber optics, or any suitable communication protocol that enables server 124 and/or intermediate servers 202 to operate as described herein. In one embodiment, panel data connection 206 is communicatively coupled to network 122 and/or server data connection 204.

In the alternative embodiment, intermediate servers 202 gather data from solar panel groups 142 and transmit data to solar panel groups 142. More specifically, each intermediate server 202 receives data from one or more components of solar group 142, such as one or more solar panels 102, inverters 106, controllers 110, communication devices 114, and/or network connectors 118, and stores the data in memory 210. Each intermediate server 202 transmits the stored data to server 124 when server 124 is able to receive data. For example, if server data connection 204 fails, or if server 124 is otherwise unable to receive data, each intermediate server 202 stores the data in memory 210 until server 124 is able to receive data again. As such, intermediate servers 202 buffer data between solar panel groups 142 and server 124, and facilitate increasing and/or maintaining a data communication between solar panel groups 142 and server 124. Moreover, intermediate servers 202 may aggregate data from server 124 and/or solar panel groups 142, such that the data may be transmitted via server data connection 204 and/or panel data connection 206 more compactly. As such, intermediate servers 202 may facilitate improving an efficiency and/or utilization of network 122, server data connection 204, and/or panel data connection 206.

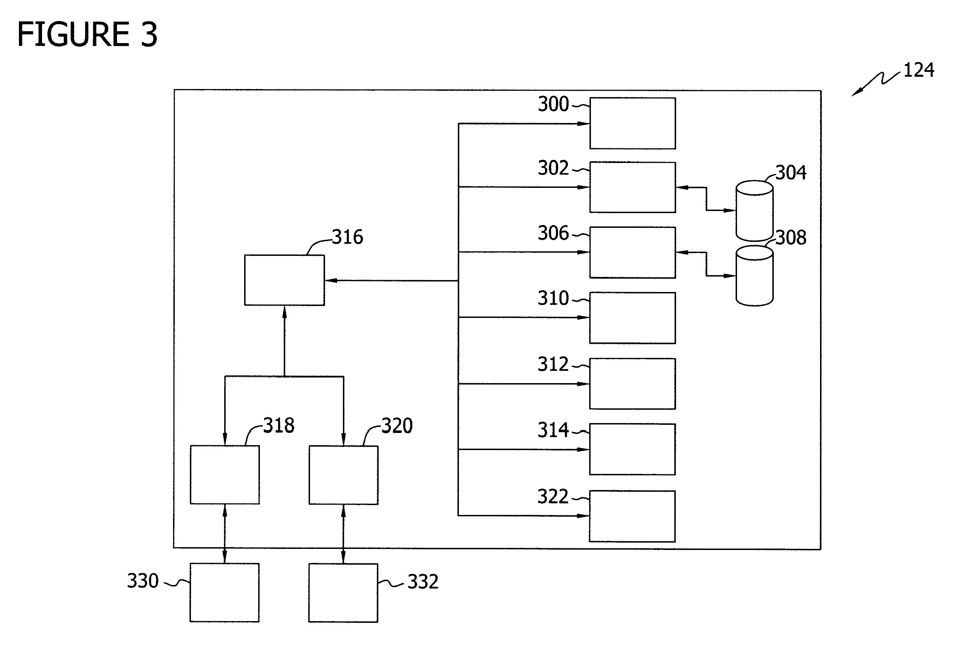

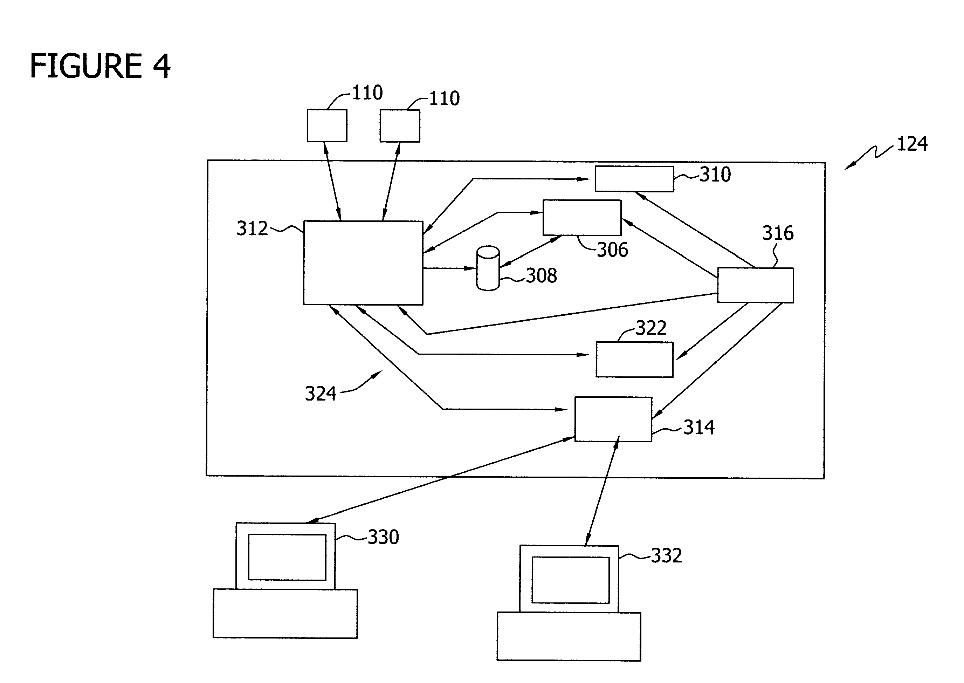

Figure 3 is a block diagram of a portion of server 124 that may be used with power system 100 (shown in Figure 1) and/or power system 200 (shown in Figure 2). Figure 4 is a block diagram of an alternate view of a portion of server 124, and similar components are numbered with the same reference numerals. In the exemplary embodiment, server 124 includes a communication module 300, a configuration module 302 that is coupled to a configuration database 304, and a database module 306 that is coupled to a database 308. Server 124 also includes an analysis module 310, an automation module 312, a system management module 314, and a health monitoring module 316. Server 124 also includes a local interface module 318, a remote interface module 320, and an alarm management module 322. In the exemplary embodiment, the modules are implemented and/or stored on a computer readable medium, such as memory 128 or memory 210 (both shown in Figure 2). For the sake of clarity, Figure 4 does not show each component of server 124 that appears in Figure 3, but rather shows a plurality of data connections 324 within server 124 that communicatively couple one or more modules within server 124 together. Intermediate server 202 (shown in Figure 2) is substantially similar to server 124, and the components and operation of server 124 described herein apply to intermediate server 202 unless otherwise specified.

Communication module 300 is configured to be communicatively coupled to one or more components of power system 100 and/or power system 200. As such, communication module 300 may be communicatively coupled to one or more controllers 110 of one or more solar panels 102, solar panel arrays 104, and/or solar panel groups 142, and/or to one or more communication devices 114 and/or network connectors 118, via network 122 (all shown in Figure 1). Alternatively, communication module 300 may be communicatively coupled to one or more intermediate servers 202 via server data connection 204 (both shown in Figure 2). In the exemplary embodiment, communication module 300 transmits data to one or more components of power system 100 and/or power system 200, and receives data from one or more components of power system 100 and/or power system 200.

In the exemplary embodiment, configuration module 302 is configured to transmit configuration commands to one or more components of power system 100 and/or power system 200 via communication module 300 and/or via automation module 312. In one embodiment, the configuration commands include information regarding a desired initialization profile of each component that each component implements upon a system and/or a component startup. Moreover, configuration module 302 is configured to receive configuration data from the components of power system 100 and/or power system 200. The received configuration data may include, for example, one or more unique identification numbers for each component, a physical configuration or location of components within power system 100 and/or power system 200, and/or any suitable configuration data that enables power system 100 and/or power system 200 to operate as described herein. In the exemplary embodiment, configuration module 302 is communicatively coupled to configuration database 304. Configuration module 302 stores the received configuration data in configuration database 304 and retrieves the configuration data from configuration database 304 to configure one or more applications or programs executed on server 124. In the exemplary embodiment, configuration database 304 is housed within server 124. In an alternative embodiment, configuration database 304 is housed within a remote computer (not shown).

In the exemplary embodiment, database module 306 receives and stores operational and/or statistical data regarding power system 100 and/or power system 200. Database module 306 is communicatively coupled to database 308. In the exemplary embodiment, database module 306 is housed within server 124. In an alternative embodiment, database module 306 is housed within a remote server (not shown). In the exemplary embodiment, database module 306 receives operational data from automation module 312 and/or from components in power system 100 and/or power system 200, such as, for example, from one or more controllers 110. The operational data may include, without limitation, a temperature, a voltage, a current, a real power, a reactive power, and/or an alarm status of solar panels 102 and/or inverters 106.

Moreover, the operational data may include a quantity of active power and/or reactive power received by substation 138 (shown in Figure 2), a quantity of active power and/or reactive power transmitted to electrical grid 140 (shown in Figure 2) by substation 138, a temperature measured by meteorological sensor 136, and/or any suitable data. Database module 306 also receives statistical data from analysis module 310 and/or from another module of server 124. Such statistical data may include, without limitation, an average quantity of electrical power produced by solar panels 102, an expected quantity of power to be produced by solar panels 102, an efficiency of power system 100 and/or power system 200, and/or any suitable statistical data that enables power system 100 and/or power system 200 to operate as described herein. Database module 306 stores the operational and/or statistical data in database 308.

Analysis module 310 is configured to analyze the operational data received by server 124. More specifically, analysis module 310 is configured to generate statistical data by executing one or more algorithms on the operational data. Analysis module 310 transmits the statistical data to database module 306 for storage in database 308, and/or to display 130 (shown in Figure 2). In one embodiment, analysis module 310 and/or database module 306 generate one or more reports based on the operational data and/or the statistical data. Such reports may include, without limitation, a revenue, an efficiency, a performance, and/or any suitable compilation of data of power system 100, power system 200, and/or of one or more components of power system 100 and/or power system 200.

In the exemplary embodiment, automation module 312 controls and monitors power system 100 and/or power system 200. Automation module 312 is communicatively coupled to one or more controllers 110 or other components of power system 100 and/or power system 200. Automation module 312 receives data, such as real-time data, from controllers 110 and transmits commands to controllers 110. The transmitted commands may be broadcast or sent to all controllers 110 substantially concurrently, or the transmitted commands may be sent to controllers 110 individually or to groups of controllers 110. Likewise, the data may be received from all controllers 110 substantially concurrently, or the data may be received from controllers 110 individually or from groups of controllers 110. As such, automation module 312 facilitates enabling server 124 to aggregate data from controllers 110 and/or other components of power system 100 and/or power system 200, and facilitates enabling server 124 to control an operation of controllers 110 and/or other components collectively. If the received data satisfies one or more predefined conditions, automation module 312 may generate one or more alarms or alerts based on the received data as more fully described herein.

In the exemplary embodiment, system management module 314 is configured to interface with an electrical utility grid, such as electrical grid 140 (shown in Figure 1), and facilitates controlling the operation of power system 100 and/or power system 200 based on the electrical utility grid demands. For example, if the grid requires more or less power from power system 100 and/or power system 200, system management module 314 can transmit one or more commands to adjust the power output of power system 100, power system 200, and/or solar panels 102 appropriately.

In the exemplary embodiment, health monitoring module 316 is communicatively coupled to each module within server 124. Health monitoring module 316 receives performance data from each module within server 124 and stores the performance data in memory 128 and/or memory 210. In the exemplary embodiment, health monitoring module 316 uses the performance data to monitor an operation of each module. Health monitoring module 316 may generate one or more log files and/or other suitable data regarding the operation of the modules, and may store the log files and/or other data in memory 128 and/or memory 210. Health monitoring module 316 determines if one or more modules of server 124 has an error. Health monitoring module 316 generates one or more alarms if a module is determined to have an error, as more fully described herein.

In the exemplary embodiment, local interface module 318 provides data access to a local user 330 via, for example, user interface 132 (shown in Figure 2). More specifically, a local user 330 manipulates user interface 132 to communicate with local interface module 318 to transmit and receive data, such as operational and/or statistical data, to and from server 124. Moreover, local user 330 may transmit one or more commands to one or more components of power system 100 and/or power system 200 via local interface module 318 to control an operation of the components. Local user 330 may also utilize user interface 132 and local interface module 318 to present operational and/or statistical data on display 130.

In the exemplary embodiment, remote interface module 320 is configured to provide data access to a remote user 332. More specifically, a remote user 332 connects to remote interface module 320 to transmit and receive data to and from server 124, such as operational and/or statistical data. Remote user 332 may connect to remote interface module 320 via the internet, such as via a web page, via a remote computer coupled to a local area network (LAN) or a wide area network (WAN), and/or via any suitable remote interface (not shown) that enables power system 100 and/or power system 200 to operate as described herein. Moreover, remote user 332 may transmit one or more commands to one or more components of power system 100 and/or power system 200 via remote interface module 320 to control an operation of the components. Remote user 332 may also utilize user interface 132 and remote interface module 320 to present data on display 130 and/or on a remote display (not shown).

Alarm management module 322 receives one or more alarms from automation module 312, from health monitoring module 316, and/or from other components of server 124. Alarm management module 322 transmits the alarms to display 130, to local interface module 318 for viewing by local user 330, and/or to remote interface module 320 for viewing by remote user 332. Additionally or alternatively, alarm management module 322 may transmit one or more alarm notifications to local user 330 and/or to remote user 332 by generating an audible noise, by energizing a light-emitting diode (LED) or other lighting device, and/or by generating an internet notification, an email, a short message service (SMS) or other text message, an automated telephone call, and/or any suitable visual, audial, or tactile alarm notification.

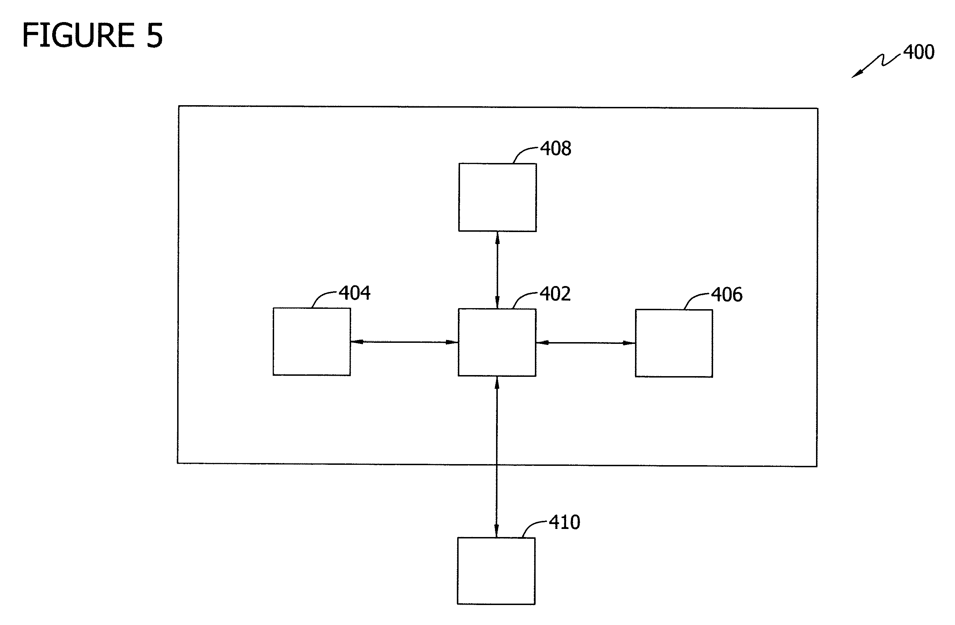

Figure 5 is a block diagram of an exemplary control interface 400 that may be used with server 124, controller 110 (both shown in Figure 1), and/or intermediate server 202 (shown in Figure 2). In the exemplary embodiment, control interface 400 includes a web server 402 that is communicatively coupled to a command and event log 404, to an operational data log 406, to a controller module 408, and to a web browser 410. Control interface 400 is included within each controller 110, each intermediate server 202, and server 124. In an alternative embodiment, control interface 400 is included within server 124 and/or intermediate server 202, and server 124 and/or intermediate server 202 use control interface 400 to communicate with one or more controllers 110 using network 122 (shown in Figure 1) or any suitable communication medium.

In the exemplary embodiment, web server 402 communicatively couples web browser 410 to control interface 400. More specifically, web server 402 receives data requests and/or commands from web browser 410, and transmits the data requests and/or commands to appropriate components within control interface 400, power system 100, and/or power system 200. Web server 402 receives responses from the components and transmits the responses to web browser 410. Alternatively, web server 402 may interface with any suitable system and/or application, including other power systems or interfaces, instead of or in addition to web browser 410. In the exemplary embodiment, web server 402 is implemented within controller 110, server 124, and/or intermediate server 202. Alternatively, web server 402 is implemented within another suitable controller, server, and/or system (not shown).

In the exemplary embodiment, web server 402 provides access to controllers 110, to server 124, and/or to intermediate servers 202 remotely, such as through the internet. Web server 402 generates or is assigned an address or identifier, such as an internet protocol (IP) address for the associated controller 110, server 124, and/or intermediate server 202. The IP address or other identifier is used to remotely connect to and communicate with controller 110, server 124, and/or intermediate server 202. For example, remote user 332 (shown in Figure 3) may use web browser 410 to remotely connect to control interface 400 of controller 110 using the IP address. Remote user 332 may receive data directly from controller 110 and transmit data or commands directly to controller 110. In a similar manner, remote user 332 may use web browser 410 to remotely connect to control interface 400 of server 124 or to control interface 400 of intermediate server 202 using the IP address. Remote user 332 may receive data directly from server 124 or intermediate server 202 and may transmit data or commands directly to server 124 or intermediate server 202.

Web server 402 also provides a security policy and/or an access rights policy to controller 110, server 124, and/or intermediate server 202 through control interface 400. In one embodiment, web server 402 facilitates encrypting and decrypting data transmitted between a user, such as remote user 332, and controller 110, server 124, and/or intermediate server 202. Moreover, web server 402 implements an access rights policy that restricts access to one or more functions of controller 110, server 124, and/or intermediate server 202. For example, web server 402 requests a username and a password from a user when the user attempts to access controller 110, server 124, and/or intermediate server 202. If the username and/or password is incorrect, web server 402 may deny access to controller 110, server 124, and/or intermediate server 202. If the username and password are correct, web server 402 may allow varying levels of access to controller 110, server 124, and/or intermediate server 202 based on permissions associated with the username. For example, a particular username may be associated with a read-only access permission, such that a user that accesses web server 402 with the username may only receive data from controller 110, server 124, and/or intermediate server 202, and may not control an operation of controller 110, server 124, and/or intermediate server 202.

Additionally or alternatively, web server 402 includes an interlocking mode to facilitate preventing conflicting access to controller 110, server 124, and/or intermediate server 202. The interlocking mode enables a user to "lock" controller 110, server 124, and/or intermediate server 202 such that only a local user, or only a particular remote user may access controller 110, server 124, and/or intermediate server 202. The interlocking mechanism facilitates enabling a maintenance technician or another user to have uninterrupted access to controller 110, server 124, and/or intermediate server 202 for maintenance, repair, and/or for other suitable purposes. The user that locked controller 110, server 124, and/or intermediate server 202 may release the lock to enable other users to access controller 110, server 124, and/or intermediate server 202.

In the exemplary embodiment, command and event log 404 receives and stores data in a memory (not shown). In one embodiment, command and event log 404 receives and stores alarm events, operational data, operational commands, and diagnostic events of controller 110, server 124, intermediate server 202, and/or control interface 400. Moreover, command and event log 404 receives and stores commands transmitted by a user to controller 110, server 124, intermediate server 202, and/or control interface using control interface 400. A user may retrieve data stored within command and event log 404 through control interface 400.

Operational data log 406 receives and stores operational data of controller 110, server 124, and/or intermediate server 202 in a memory (not shown). In one embodiment, the operational data includes a power generated, a DC voltage output, a DC current output, a temperature, an irradiance, and/or any suitable data of solar panel 102, inverter 106, and/or of any other suitable component of power system 100 and/or power system 200. In the exemplary embodiment, operational data log 406 receives and stores the operational data periodically, for example every second, and the operational data is received asynchronously with respect to server 124 and/or intermediate server 202. In one embodiment, control interface 400 automatically polls controller 110 to receive the operational data without first receiving a request from server 124 and/or intermediate server 202 to gather the operational data. As such, a network traffic to and from server 124 and/or intermediate server 202 is facilitated to be reduced.

Controller module 408 is communicatively coupled between web server 402 and controller 110. Controller application receives commands from web server 402 and transmits the commands to controller 110 to control an operation of solar panel 102, inverter 106, and/or any suitable component of power system 100 and/or power system 200. The commands may be transmitted to web server 402 from remote user 332, from server 124, from intermediate server 202, and/or from any suitable origin.

Web browser 410 provides a graphical user interface for remote user 332 and/or local user 330 to access control interface 400. Web browser 410 provides access to and displays any suitable data received from and/or stored by controller 110, server 124, intermediate server 202, and/or control interface 400. Web browser 410 receives data, for example operational data, from control interface 400, either automatically or upon request from a user. Web browser 410 presents the data to the user in one or more web pages having one or more views or displays. Web browser 410 is configurable, such that the user can rearrange and customize the views and/or displays presented therein. Web browser 410 also includes one or more buttons, links, and/or interfaces that enable the user to transmit commands to control interface 400. The user can customize the commands sent to control interface 400, such as by grouping a plurality of commands together and/or by modifying one or more characteristics of the commands. Moreover, web browser 410 provides status information of one or more components of power system 100 and/or power system 200, such as an alarm status. The user may view and change one or more alarm conditions, such as a threshold that one or more characteristics of a component must reach, exceed, or fall below before an alarm is generated. In the exemplary embodiment, web browser 410 includes separate web pages and/or displays for each controller 110 and/or each other component of power system 100 and/or power system 200. Moreover, web browser 410 includes a web page displaying a status of the overall power system 100 and/or power system 200. Alternatively, one or more components of power system 100 and/or power system 200 are combined in a web page and/or display.

A technical effect of various of the systems and method described herein includes at least one of (a) providing a plurality of solar panels, (b) coupling at least one controller to a plurality of solar panels, (c) communicatively coupling a server to at least one controller, (d) configuring a server to receive solar panel data from at least one controller, (e) configuring a server to transmit solar panel data to a user, and (f) configuring a server to control an operation of a plurality of solar panels.

The above-described embodiments facilitate providing an efficient and cost-effective power system. The power system described herein facilitates providing an interconnected system of solar panels and associated components that is monitored and controlled by a central server. The power system facilitates enabling a server to monitor and control the components of the power system, including the controllers that are provided with the power system. Operational and statistical data of the components are facilitated to be provided to a local and/or remote user. Moreover, the control interface described herein enables a user to remotely connect to the components of the power system. As such, a user may be able to more efficiently control an operation of the power system and/or monitor data from one or more components of the power system.

Exemplary embodiments of a solar power system are described above in detail. The method, system, and server are not limited to the specific embodiments described herein, but rather, components of the system and/or server and/or steps of the method may be utilized independently and separately from other components and/or steps described herein. For example, the method may also be used in combination with other power systems and methods, and is not limited to practice with only the solar power system as described herein. Rather, the exemplary embodiment can be implemented and utilized in connection with many other power applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A power system, comprising:
   a plurality of power generation units configured to generate power from a renewable energy source;
   at least one controller configured to be coupled to at least one power generation unit of said plurality of power generation units; and,
   a server configured to be communicatively coupled to said at least one controller, said server configured to:
      receive operational data from said at least one controller;
      transmit the operational data to a user; and,
      control an operation of said plurality of power generation units.
2. A power system in accordance with clause 1, wherein said server comprises at least one display, said server is further configured to display the operational data on said at least one display.
3. A power system in accordance with any preceding clause, wherein said at least one controller comprises a control interface, said control interface configured to enable a user to remotely control an operation of said at least one controller.
4. A power system in accordance with any preceding clause, wherein the operational data includes at least one of a temperature, a voltage, and a current of said plurality of power generation units.
5. A power system in accordance with any preceding clause, wherein said server includes a remote interface module that enables the user to remotely control an operation of said power system.
6. A power system in accordance with any preceding clause, wherein said server includes an analysis module configured to provide statistical data to the user.
7. A power system in accordance with any preceding clause, further comprising at least one intermediate server communicatively coupled to said server and to at least one power generation unit of said plurality of power generation units, said intermediate server configured to transmit data between said server and said at least one power generation unit.
8. A power system in accordance with any preceding clause, wherein said at least one intermediate server comprises a memory, said at least one intermediate server is configured to store the data in said memory.
9. A method of assembling a power system, said method comprising:
   providing a plurality of solar panels and at least one inverter;
   coupling at least one controller to at least one solar panel of the plurality of solar panels and to the at least one inverter; and,
   communicatively coupling a server to the at least one controller, the server configured to:
      receive solar panel operational data from the at least one controller;
      transmit the solar panel operational data to a user; and,
      control an operation of the plurality of solar panels.
10. A method in accordance with any preceding clause, further comprising coupling at least one display to the server, wherein the server is further configured to display the solar panel operational data on the at least one display.
11. A method in accordance with any preceding clause, further comprising providing a control interface within at least one controller, the control interface configured to enable a user to remotely control an operation of the at least one controller.
12. A method in accordance with any preceding clause, wherein the solar panel operational data includes at least one of a temperature, a voltage, and a current of the plurality of solar panels.
13. A method in accordance with any preceding clause, further comprising providing a remote interface module within the server, the remote interface module enables the user to remotely control an operation of the power system.
14. A method in accordance with any preceding clause, further comprising providing an analysis module within the server, the analysis module configured to provide solar panel statistical data to the user.
15. A method in accordance with any preceding clause, further comprising communicatively coupling least one intermediate server to the server and to at least one solar panel of the plurality of solar panels, the intermediate server is configured to transmit data between the server and the at least one power generation unit.
16. A method in accordance with any preceding clause, further comprising providing a memory within the at least one intermediate server, the at least one intermediate server is configured to store the data in the memory.
17. A server for use in a power system having a plurality of solar panels and at least one controller, said server comprising:
   a communication module configured to be communicatively coupled to the at least one controller; and,
   an interface module configured to provide data communication between said server and a user;
   wherein said server is configured to:
      receive solar panel data from the at least one controller;
      transmit the solar panel data to the user; and,
      control an operation of the plurality of solar panels.
18. A server in accordance with any preceding clause, wherein said server comprises a display, said server is further configured to display the solar panel data on said display.
19. A server in accordance with any preceding clause, wherein said server is configured to transmit the solar panel data to a remote user.
20. A server in accordance with any preceding clause, wherein said server comprises a memory, said server is further configured to store the solar panel data in said memory.

## Claims

1. A power system (100), comprising:
a plurality of power generation units configured to generate power from a renewable energy source;
at least one controller (110) configured to be coupled to at least one power generation unit of said plurality of power generation units; and,
a server (124) configured to be communicatively coupled to said at least one controller, said server configured to:
receive operational data from said at least one controller;
transmit the operational data to a user (330,332); and
control an operation of said plurality of power generation units.

2. A power system (100) in accordance with claim 1, wherein said server (124) comprises at least one display (130,212), said server is further configured to display the operational data on said at least one display.

3. A power system (100) in accordance with any preceding claim, wherein said at least one controller (110) comprises a control interface (400), said control interface configured to enable a user (330,332) to remotely control an operation of said at least one controller.

4. A power system (100) in accordance with any preceding claim, wherein the operational data includes at least one of a temperature, a voltage, and a current of said plurality of power generation units.

5. A power system (100) in accordance with any preceding claim, wherein said server (124) includes a remote interface module (320) that enables the user to remotely control an operation of said power system.

6. A power system (100) in accordance with any preceding claim, wherein said server (124) includes an analysis module (310) configured to provide statistical data to the user (330,332).

7. A power system (100) in accordance with any preceding claim, further comprising at least one intermediate server (202) communicatively coupled to said server (124) and to at least one power generation unit of said plurality of power generation units, said intermediate server configured to transmit data between said server and said at least one power generation unit.

8. A power system (100) in accordance with claim 7, wherein said at least one intermediate server (202) comprises a memory (128), said at least one intermediate server is configured to store the data in said memory.

9. A server (124) for use in a power system (100) having a plurality of solar panels (102) and at least one controller (110), said server comprising:
a communication module (300) configured to be communicatively coupled to the at least one controller; and,
an interface module (318,320) configured to provide data communication between said server and a user (330,332);
wherein said server is configured to:
receive solar panel data from the at least one controller;
transmit the solar panel data to the user; and,
control an operation of the plurality of solar panels.

10. A server (124) in accordance with claim 9, wherein said server comprises a display (130,212), said server is further configured to display the solar panel data on said display.
